# EUROPEAN PATENT APPLICATION

(11) **EP 2 554 233 A1**
(43) Date of publication of application: **06.02.2013**
(21) Application number: 11765667.8
(22) Date of filing: 30.03.2011
(51) Int. Cl.: B01D 39/20, B01D 53/94, B01J 23/656, B01J 35/04, C04B 38/00, F01N 3/02

(54) **HONEYCOMB FILTER**

(30) Priority: 31.03.2010 JP 2010081897
(71) Applicant: NGK Insulators, Ltd., Nagoya-City, Aichi-ken 467-8530 (JP)
(72) Inventor: HONDA, Takahiro, Nagoya-city Aichi 467-8530 (JP); MIZUTANI, Takashi, Nagoya-city Aichi 467-8530 (JP)
(74) Representative: Naylor, Matthew John
(86) International application number: PCT/JP2011/058077
(87) International publication number: WO 2011/125767

(57) **Abstract**

A honeycomb filter 20 includes a plurality of porous partition portions 22 each forming a cell 23, the cell 23 being open at one end and closed at the other end and serving as a flow path of an exhaust gas, and a trapping layer 24 for trapping and removing solid components contained in the exhaust gas, the trapping layer 24 being disposed on each of the partition portions 22, wherein the cells include additional-deposition cells 25 on which a larger amount of solid components are deposited than the other cells, and the ratio R (%) of the number of the additional-deposition cells to the total number of cells satisfies 0 (%) < R ≤ 20 (%). The additional-deposition cells 25 have lower flow path resistance and a higher fluid flow rate, and therefore a larger amount of solid components tend to be deposited. In regeneration treatment to burn solid components, the amount of heat generation tends to increase with the amount of trapped solid components, and the combustion of the solid components in the additional-deposition cells 25 serves as an ignition point.

## Description

### Technical Field

The present invention relates to a honeycomb filter.

### Background Art

One proposed honeycomb filter includes a porous partition portion, in which a cell that is open at one end and closed at the other end and a cell that is closed at one end and open at the other end are alternately disposed, and a layer that is formed on the partition portion and traps and removes particulate matter (PM) contained in an exhaust gas (see, for example, Patent Documents 1 to 3). This honeycomb filter can trap PM using the trapping layer with low pressure loss.

Patent Document 1: JP 2004-216226 A
Patent Document 2: JP 6-33734 A
Patent Document 3: JP 1-304022 A

### Disclosure of Invention

In such a honeycomb filter, "regeneration treatment" in which trapped PM is burnt to restore the function of the filter may be performed. According to Patent Documents 1 to 3, although a trapping layer disposed on each of partition portions could decrease pressure loss, the formation of the trapping layer alone had no significant influence on the regeneration treatment efficiency. In regeneration treatment, for example, the amount of fuel in an engine is increased to raise the temperature. Thus, in order to improve mileage, there has been a demand for more efficient removal of trapped solid components.

In view of the situations described above, it is a principal object of the present invention to provide a honeycomb filter for more efficiently removing trapped solid components.

In order to achieve the principal object, the present invention has employed the following means.

A honeycomb filter according to an aspect of the present invention includes
a plurality of porous partition portions each forming a cell, the cell being open at one end and closed at the other end and serving as a flow path of a fluid, and
a trapping layer for trapping and removing solid components contained in the fluid, the trapping layer being disposed on each of the partition portions,
wherein, when a visualization test is performed after a predetermined crack inspection shows that the honeycomb filter has no cracks, the visualization test feeding fine particles having an average particle size determined from the average pore size of the partition portions from one end face of the honeycomb filter at a gauge pressure of 1 Pa or more and 10 Pa or less and irradiating the other end face with light to visualize fine particles flowing from that other end face, the cells include additional-deposition cells having a luminance difference of 150 cd/m² or more in the visualization test, and the ratio R (%) of the number of the additional-deposition cells to the total number of cells satisfying 0(%) < R ≤ 20 (%).

A honeycomb filter according to another aspect of the present invention includes
a plurality of porous partition portions each forming a cell, the cell being open at one end and closed at the other end and serving as a flow path of a fluid, and
a trapping layer for trapping and removing solid components contained in the fluid, the trapping layer being disposed on each of the partition portions,
wherein the cells include additional-deposition cells each having an additional-deposition region for further trapping the solid components after the solid components are trapped, and the ratio R (%) of the number of the additional-deposition cells to the total number of cells satisfies 0 (%) < R ≤ 20 (%).

The honeycomb filter has the trapping layer on each of the partition portions forming the cells. The cells include additional-deposition cells having a predetermined luminance difference in a visualization test. The additional-deposition cells are formed such that the ratio R (%) of the additional-deposition cells to the total number of cells satisfies 0 (%) < R ≤ 20 (%). In general, in regeneration treatment to burn trapped solid components to recover the function of a filter, the regeneration rate (efficiency) tends to increase with the amount of trapped solid components. A large amount of solid components are deposited on the additional-deposition cells, and the combustion of the solid components on the additional-deposition cells in regeneration treatment serves as an ignition point and facilitates removal of trapped solid components. The honeycomb filter has at least one additional-deposition cell, and the ratio R of the number of additional-deposition cells to the total number of cells is 20 (%) or less. A ratio R of 20 (%) or less results in an effective decrease in pressure loss and more efficient removal of trapped solid components. The "additional-deposition cells" may be cells on which an additional amount of solid components can be trapped after solid components have been trapped as compared with the other general cells, or cells on which a 10% by weight or more larger amount of solid components than at least one of adjacent cells can be deposited. The term "crack", as used herein, refers to a narrow space having such a size that affects PM trap and disposed in a partition portion between a cell having an opening on at least the inlet side through which a fluid flows into the cell (hereinafter also referred to as an inlet cell) and a cell having an opening on at least the outlet side through which a fluid flows out of the cell (hereinafter also referred to as an outlet cell) in the axial direction of a carrier passing through the inlet cell and the outlet cell or along a cross section perpendicular to the axial direction. The trapping layer may be formed on an inlet cell and the additional-deposition cells may be among the inlet cells for the fluid. The additional-deposition cells may be cells on which an additional amount of solid components can be trapped after solid components have been trapped as compared with the other cells.

In a honeycomb filter according to an aspect of the present invention, the ratio R of the additional-deposition cells to the total number of cells is preferably 7 (%) or less. This allows trapped solid components to be more efficiently removed with decreased pressure loss.

In a honeycomb filter according to an aspect of the present invention, the additional-deposition cells are cells having an incomplete trapping layer or cells having no trapping layer or both. Such additional-deposition cells have lower flow path resistance than cells having a complete trapping layer and therefore allow a larger amount of fluid to pass through than the other cells, thus trapping a larger amount of solid components. Thus, the additional-deposition cells can be relatively easily prepared by forming an incomplete trapping layer. The "cell having an incomplete trapping layer" may be a cell having a trapping layer having a smaller thickness than the trapping layer in the other portion. The trapping layer having a smaller thickness may have a thickness of 30% or less, more preferably 50% or less, of the average thickness of the trapping layers over the entire honeycomb filter. Alternatively, the "cell having an incomplete trapping layer" may have a trapping layer having substantially the same thickness as in the other portion but have a portion having no trapping layer in at least part of the cell. The portion having no trapping layer may be disposed in any position with respect to the fluid flow direction and may have a maximum length of 300 µm or less, more preferably 200 µm or less. The trapping layer of each additional-deposition cell may constitute 75% or less, 50% or less, or 25% or less of the area of the entire inner wall of one cell. The additional-deposition cells preferably have no trapping layer. This can further decrease flow path resistance and allows an increased amount of solid components to be trapped.

In a honeycomb filter according to an aspect of the present invention, the trapping layers may be formed by supplying an inorganic material that is a raw material for the trapping layers to the cells using a gas as a transport medium. Transportation using a gas can be utilized to relatively easily control the morphology, such as the thickness, of the trapping layer.

In a honeycomb filter according to an aspect of the present invention, the additional-deposition cells may be identified by pressure-feeding fine particles from one end face of the honeycomb filter and irradiating the other end face with light to visualize fine particles flowing from that other end face. Thus, the additional-deposition cells can be identified by a relatively easy method for illuminating fine particles flowing from the end face. For example, the identification method may involve feeding fine particles having a known particle size distribution and a known concentration from one end face of the honeycomb filter in a darkroom, irradiating the other end face with a slit-like laser beam, and detecting a luminance difference resulting from fine particles leaking from that other end face. Examples of the "fine particles" fed from the end face include fine particles generated by the combustion of incense, such as an incense stick, fine particles generated by spray or vaporization of a solvent, such as water, and fine particles generated by spreading fine particles, such as calcium carbonate fine particles. The fine particles have an average particle size determined from the average pore size of the partition portions and are selected according to the permeability of the partition portions. For example, the fine particles may have an average particle size of 0.3 µm or more and 10 µm or less. The conditions for pressure feed include a gauge pressure of 1 Pa or more and 10 Pa or less. The additional-deposition cells have a luminance difference of 150 cd/m² or more from the lowest luminance of the cells.

In a honeycomb filter according to an aspect of the present invention, the partition portions may contain one or more inorganic materials selected from cordierite, SiC, mullite, aluminum titanate, alumina, silicon nitride, SIALON, zirconium phosphate, zirconia, titania, and silica. The trapping layers may contain one or more inorganic materials selected from cordierite, SiC, mullite, aluminum titanate, alumina, silicon nitride, SIALON, zirconium phosphate, zirconia, titania, and silica. Preferably, the trapping layers are formed of the material of the partition portions.

A honeycomb filter according to an aspect of the present invention may be formed by joining two or more honeycomb segments with a bonding layer. Each of the honeycomb segments has the partition portion and the trapping layer. Joining with the bonding layer can increase the mechanical strength of the honeycomb filter.

In a honeycomb filter according to an aspect of the present invention, at least one of the partition portion and the trapping layer may be loaded with a catalyst. The catalyst can facilitate the removal of components contained in a fluid, such as the removal of trapped solid components by combustion.

### Brief Description of Drawings

Fig. 1 is a schematic explanatory view of an example of the structure of a honeycomb filter 20.
Fig. 2 is an explanatory view of a method for calculating the thickness of a trapping layer on the basis of SEM observation.
Fig. 3 is an explanatory view of outer-area, central-area, and dispersed additional-deposition cells 25.
Fig. 4 is an explanatory view of a laser smoke detector 60.
Fig. 5 is a schematic view of PM trap on additional-deposition cells 25.
Fig. 6 is an explanatory view of a temperature change caused by an additional-deposition cell 25 in regeneration treatment.
Fig. 7 is a schematic explanatory view of an example of the structure of a honeycomb filter 40.
Fig. 8 is an explanatory view of heat cycles in regeneration treatment.
Fig. 9 is a graph of regeneration efficiency and pressure loss increase rate as a function of the ratio of additional-deposition cells.

### Best Modes for Carrying Out the Invention

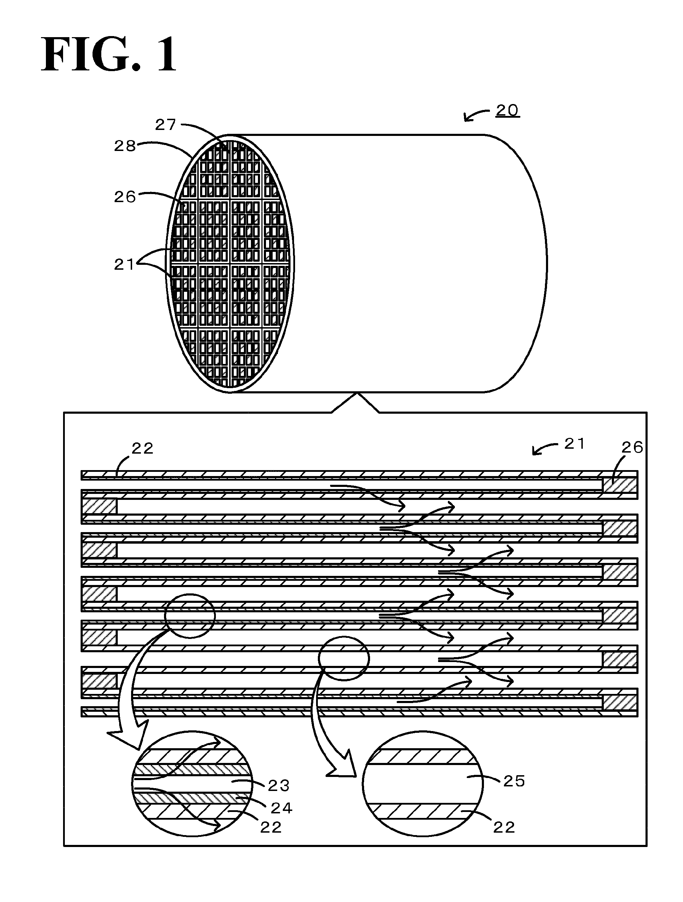

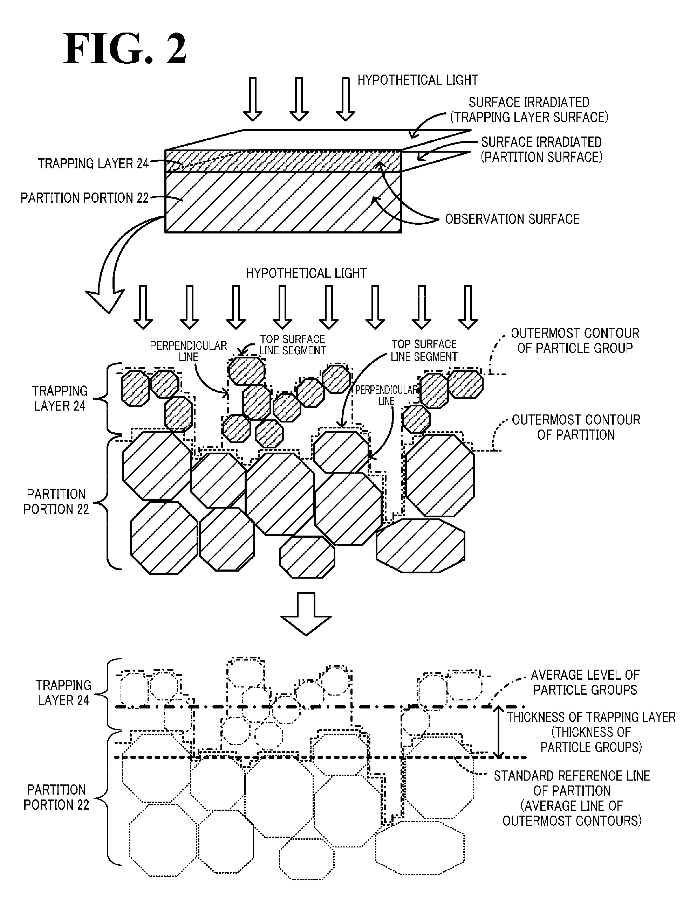

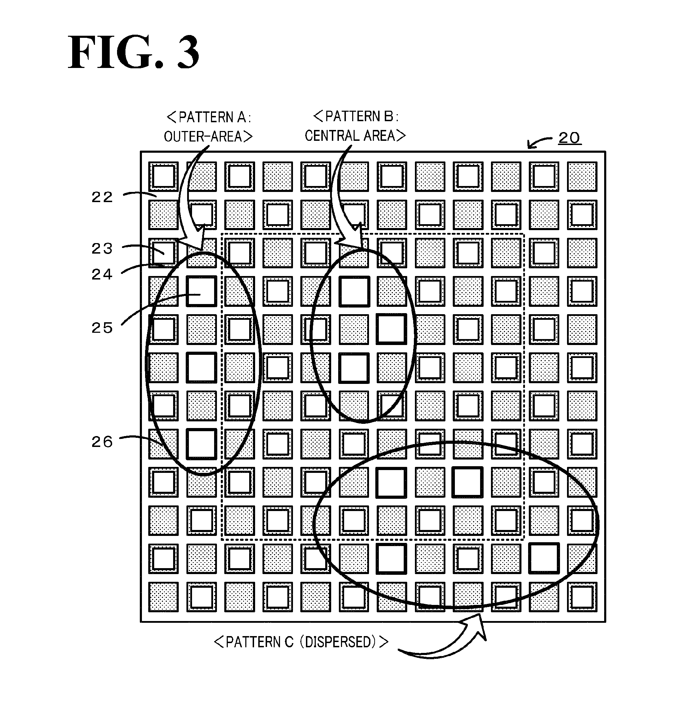

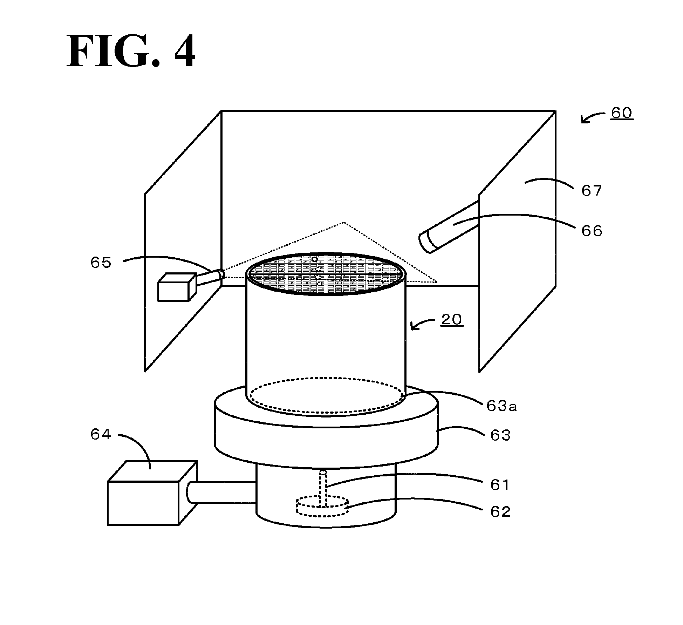

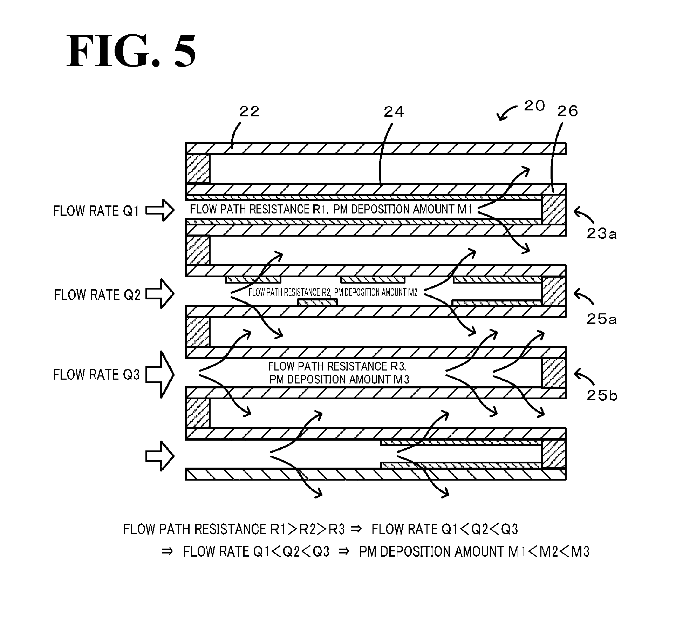

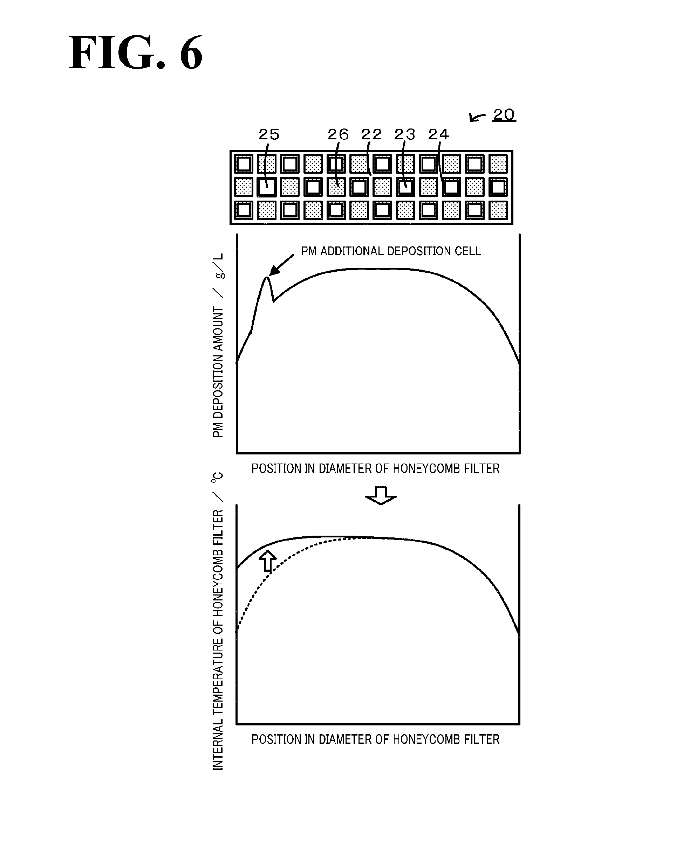

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of a method for calculating the thickness of a trapping layer on the basis of SEM observation. Fig. 3 is an explanatory view of an outer area, the central area, and dispersed additional-deposition cells 25. Fig. 4 is an explanatory view of a laser smoke detector 60. Fig. 5 is a schematic view of PM trap on additional-deposition cells 25. Fig. 6 is an explanatory view of a temperature change caused by an additional-deposition cell 25 in regeneration treatment. As illustrated in Fig. 1, the honeycomb filter 20 according to the present embodiment includes two or more honeycomb segments 21 joined together with a bonding layer 27 and an outer protective portion 28 disposed around the honeycomb segments 21. Each of the honeycomb segments 21 includes a partition portion 22. The honeycomb filter 20 includes porous partition portions 22 each forming a cell 23, the cell 23 being open at one end and sealed with a sealing portion 26 at the other end and serving as an exhaust gas flow path, and a trapping layer 24 for trapping and removing solid components (hereinafter also referred to as PM) contained in a fluid, the trapping layer being disposed on each of the partition portions 22. In Fig. 1, the honeycomb filter 20 is cylindrical, each of the honeycomb segments 21 is rectangular columnar, and each of the cells 23 is rectangular. In the honeycomb filter 20, the partition portion 22 is formed such that a cell 23 that is open at one end and closed at the other end and a cell 23 that is closed at one end and open at the other end are alternately disposed. In the honeycomb filter 20, an exhaust gas enters a cell 23 having an opening on the inlet side (hereinafter also referred to as an inlet cell), passes through the trapping layer 24 and the partition portion 22, and is exhausted from another cell 23 having an opening on the outlet side (hereinafter also referred to as an outlet cell), during which PM in the exhaust gas is trapped on the trapping layer 24.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells may be polygonal, such as triangular, tetragonal, hexagonal, or octagonal, circular, or streamlined, such as elliptical, or combination thereof. For example, the cells 23 may have a tetragonal cross section perpendicular to the exhaust gas flow direction.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The porosity is measured by a mercury intrusion method. The partition portion 22 preferably has an average pore size of 10 µm or more and 60 µm or less. The average pore size is measured by a mercury intrusion method. The partition portion 22 preferably has a thickness of 150 µm or more and 600 µm or less, more preferably 200 µm or more and 400 µm or less. A thickness of 150 µm or more results in high mechanical strength, and a thickness of 600 µm or less results in low pressure loss. The partition portion 22 having such a porosity, an average pore size, and a thickness allows an exhaust gas to easily pass through the partition portion 22 and PM to be easily trapped and removed.

The trapping layer 24 for trapping and removing PM contained in an exhaust gas may be formed of particle groups having an average particle size smaller than the average pore size of the partition portion 22 and may be disposed on the partition portion 22. The trapping layer 24 preferably has an average pore size of 0.2 µm or more and 10 µm or less and a porosity of 40% by volume or more and 95% by volume or less. An average pore size of 0.2 µm or more results in the prevention of an excessive initial pressure loss in the absence of PM deposition. An average pore size of 10 µm or less results in an improvement in trapping efficiency, the prevention of PM entering the pores of the partition portion 22 through the trapping layer 24, and the prevention of the reduction in the effect of decreasing pressure loss during PM deposition. A porosity of 40% by volume or more results in the prevention of an excessive initial pressure loss in the absence of PM deposition. A porosity of 95% by volume or less results in the formation of a surface layer serving as a durable trapping layer 24. The average size of particles constituting the trapping layer is preferably 0.5 µm or more and 15 µm or less. When the average size of particles constituting the trapping layer is 0.5 µm or more, a space between the particles constituting the trapping layer can be sufficiently provided, thus ensuring high permeability of the trapping layer and preventing a sudden increase in pressure loss. When the average size of particles constituting the trapping layer is 15 µm or less, there are a sufficient number of points of contact between the particles, ensuring a sufficient bond strength between the particles and a high peel strength of the trapping layer. Thus, it is possible to maintain high PM trapping efficiency, prevent a sudden increase in pressure loss immediately after the start of PM trapping, decrease pressure loss during PM deposition, and impart durability to the trapping layer. The trapping layer 24 preferably has an average thickness of 10 µm or more and 80 µm or less. At a trapping layer thickness of 10 µm or more, it is easy to trap PM. A trapping layer thickness of 80 µm or less results in a decrease in the permeation resistance of a partition and a decrease in pressure loss. The average thickness of the trapping layer is preferably 20 µm or more and 60 µm or less, more preferably 30 µm or more and 50 µm or less. The trapping layer 24 may be formed on the partition portion 22 of each of the exhaust gas inlet and outlet cells. As illustrated in Fig. 1, preferably, the trapping layer 24 is formed on the partition portion 22 of each inlet cell and is not formed on the partition portion 22 of each outlet cell. This allows PM contained in a fluid to be efficiently removed with further decreased pressure loss. Furthermore, this facilitates the manufacture of the honeycomb filter 20. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. More preferably, the trapping layer 24 contains 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite. The average particle size of the particle groups constituting the trapping layer 24 is a mean value measured by observing the trapping layer 24 with a scanning electron microscope (SEM) and measuring the individual particles of the trapping layer 24 in an image obtained. The average particle size of raw material particles is the median size (D50) measured with a laser diffraction/scattering particle size distribution analyzer using water as a dispersion medium.

A method for measuring the thickness of the trapping layer 24 and other components will be described below. First, a method for measuring the thickness of the trapping layer 24 will be described below with reference to Fig. 2. The thickness of the trapping layer 24, in other words, the thickness of the particle groups constituting the trapping layer is determined in the following manner. The thickness of the trapping layer is determined by embedding a partition substrate of the honeycomb filter 20 in a resin and polishing the resin to prepare a sample for observation, observing the sample with a scanning electron microscope (SEM), and analyzing an image obtained. First, the sample for observation is prepared by cutting and polishing such that a cross section perpendicular to the fluid flow direction serves as an observation surface. The observation surface of the sample for observation prepared is photographed at measuring points described below in a visual field of approximately 500 µm x 500 µm at a SEM magnification in the range of 100 to 500. The outermost contour of a partition is then hypothetically drawn on an image obtained. The outermost contour of a partition is a line showing the outline of the partition and refers to a projector obtained by irradiating a partition surface (a surface to be irradiated; see the top in Fig. 2) with hypothetical parallel light in the direction perpendicular to the partition surface (see the middle in Fig. 2). The outermost contour of a partition is composed of line segments corresponding to a plurality of top surfaces of the partition at different levels irradiated with hypothetical light and perpendicular lines each connecting line segments corresponding to adjacent top surfaces of the partition at different levels. The line segments corresponding to the top surfaces of the partition are drawn at "5% resolution", in which, for example, asperities having a length of 5 µm or less are disregarded with respect to a line segment having a length of 100 µm. This prevents the occurrence of too many line segments in the horizontal direction. In the drawing of the outermost contour of a partition, the presence of a trapping layer is disregarded. Subsequently, in the same manner as in the outermost contour of a partition, the outermost contour of the particle groups constituting a trapping layer is hypothetically drawn. The outermost contour of the particle groups is a line showing the outline of the trapping layer and refers to a projector obtained by irradiating a trapping layer surface (a surface to be irradiated; see the top in Fig. 2) with hypothetical parallel light in the direction perpendicular to the trapping layer surface (see the middle in Fig. 2). The outermost contour of the particle groups is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the partition. For a porous trapping layer, in a sample for observation prepared by embedding in a resin and polishing, some particle groups are observed as if they floated in the air. The outermost contour is therefore drawn with the projector obtained by hypothetical light irradiation. Subsequently, the standard reference line of the partition is determined on the basis of the levels and lengths of the line segments of the outermost contour corresponding to the top surfaces of the partition thus drawn. The standard reference line is the average line of the outermost contour of the partition (see the bottom in Fig. 2). In the same manner as in the standard reference line of the partition, the average level of the particle groups is determined on the basis of the levels and lengths of the line segments of the outermost contour corresponding to the top surfaces of the particle groups thus drawn. The average level of the particle groups is the average line of the outermost contour of the particle groups (see the bottom in Fig. 2). The difference (length) between the average level of the particle groups and the standard reference line of the partition is considered to be the thickness of the trapping layer (the thickness of the particle groups) in the image. In this manner, the thickness of a trapping layer can be determined. The thicknesses of a trapping layer measured at a plurality of points of measurement may be averaged to determine the average thickness of the trapping layer.

The average pore size and the porosity of the trapping layer 24 are determined by image analysis based on SEM observation. In the same manner as in the thickness of the trapping layer, as illustrated in Fig. 2, images of a cross section of the honeycomb filter 20 are obtained with SEM. A region between the outermost contour of a partition and the outermost contour of particle groups is considered to be a region occupied by a trapping layer (a trapping layer region). In the trapping layer region, a region including the particle groups is referred to as a "particle group region", and a region including no particle group is referred to as a "pore region of the trapping layer". The area of the trapping layer region (trapping layer area) and the area of the particle group region (particle group area) are determined. The porosity of the trapping layer is calculated by dividing the particle group area by the trapping layer area and multiplying the quotient by 100. In the "pore region of the trapping layer", an incircle inscribed in the outermost contours of the particle groups and the partition and the periphery of the particle groups is drawn such that the diameter of the incircle is as large as possible. In the case that a plurality of incircles can be drawn in one "pore region of the trapping layer", for example, in the case of a rectangular pore region having a large aspect ratio, a plurality of incircles as large as possible are drawn such that the pore region is sufficiently filled with the incircles. In the image observation area, the average diameter of the incircles is considered to be the average pore size of the trapping layer. In this manner, the average pore size and the porosity of the trapping layer 24 can be determined.

As illustrated in Fig. 1, a honeycomb filter 20 according to the present embodiment includes the additional-deposition cells 25 each having an additional-deposition region for trapping more PM than a region having a complete trapping layer after solid components have been trapped. The additional-deposition cells 25 may be any cells on which additional PM can be deposited, for example, cells having an incomplete trapping layer 24, cells having no trapping layer 24, or both. An incomplete trapping layer 24 has decreased flow path resistance and allows an increased amount of exhaust gas to flow through, resulting in an increased amount of trapped PM, as compared with a complete trapping layer 24. For example, an additional-deposition cell 25 having an incomplete trapping layer 24 may be a cell having a trapping layer having a thickness smaller than the average thickness in the other portion. The trapping layer having a smaller thickness may have an average thickness of 30% or less, more preferably 50% or less, of the average thickness of the trapping layers over the entire honeycomb filter. Alternatively, the additional-deposition cell 25 having an incomplete trapping layer 24 may have a trapping layer having substantially the same thickness as in the other portion but have a portion having no trapping layer in at least part of the cell. The portion having no trapping layer may be disposed in any position with respect to exhaust gas flow direction and may have a maximum length of 300 µm or less, more preferably 200 µm or less. For example, the trapping layer 24 may constitute 75% or less, 50% or less, or 25% or less of the area of the entire inner wall of one cell 23. An additional-deposition cell having no trapping layer on the partition portion is more preferred. A portion having no trapping layer 24 is preferred because the portion has lower flow path resistance and traps a larger amount of solid components than a portion having the trapping layer 24. The trapping layer 24 may be formed on at least inlet cells, and the additional-deposition cells 25 may be inlet cells. In the honeycomb filter 20, the ratio R (%) of the number of the additional-deposition cells 25 to the total number of cells satisfies 0 (%) < R ≤ 20 (%). The ratio R is preferably 7 (%) or less. When the ratio R is more than 0% and 20% or less, this can further increase regeneration efficiency and prevent an increase in pressure loss. As illustrated in Fig. 3, the additional-deposition cells 25 may be present in an outer area or the central area of the honeycomb segments 21 or may be dispersed. The additional-deposition cells 25 may be present in an outer area or the central area of the honeycomb filter 20 or may be dispersed. The additional-deposition cells 25 are preferably present in an outer area of the honeycomb segments 21. Regarding "outer-area cells" and "central-area cells", when a cross section perpendicular to the flow paths of the segments or the honeycomb filter is divided into an outer region and a central region such that the outer region has the same area as the central region, a cell in the outer region may be an outer-area cell, and a cell in the central region may be a central-area cell.

The effects of the additional-deposition cells 25 will be described below with reference to Figs. 5 and 6. As illustrated in Fig. 5, in the honeycomb filter 20, the additional-deposition cells 25 satisfy the relationship of R1 > R2 > R3, wherein R1 denotes the flow path resistance of a completely coated cell 23a in which a trapping layer 24 is formed on the entire inner surface of the cell, R2 denotes the flow path resistance of an additional-deposition cell 25a in which a trapping layer 24 is partially formed on the inner surface of the cell, and R3 denotes the flow path resistance of an additional-deposition cell 25b in which no trapping layer 24 is formed on the cell 23. It is conceivable that an exhaust gas flows from a cell having high flow path resistance to a cell having low flow path resistance. Thus, the order of exhaust gas flow rates Q1, Q2, and Q3 are Q1 < Q2 < Q3, wherein Q1, Q2, and Q3 denote the exhaust gas flow rates at which the exhaust gas flows through the completely coated cell 23a and the additional-deposition cells 25a and 25b, respectively. In other words, the flow rate of an exhaust gas passing through the partition portion 22 increases as the area of the trapping layer 24 decreases. It is conceivable that the amount of PM per unit volume is substantially constant and a higher exhaust gas flow rate results in a larger amount of PM deposition. Thus, the order of the amounts of PM deposition M1, M2, and M3 is M1 < M2 < M3, wherein M1, M2, and M3 denote the amounts of PM deposition on the partition portions 22 in the completely coated cells 23a and the additional-deposition cells 25a and 25b, respectively. In other words, it is surmised that the amount of PM deposition increases as the area of the trapping layer 24 decreases (see the middle in Fig. 6). Under such conditions, regeneration treatment to remove PM deposit by combustion results in a further increased temperature in an additional-deposition cell 25 immediately after the regeneration treatment because of PM combustion. The increased temperature of the additional-deposition cell 25 affects adjacent cells 23, promoting temperature rise in the entire honeycomb filter 20 (see the bottom in Fig. 6). This facilitates the regeneration treatment of PM.

A method for identifying an additional-deposition cell 25 will be described below. An additional-deposition cell 25 can be identified by relative luminance in a laser smoke test, as illustrated in Fig. 4. The laser smoke test involves the pressure feed of fine particles (smoke) generated by the combustion of incense from one end face of a honeycomb filter and irradiation of the other end face with light for visualization of fine particles flowing from that other end face. For example, a cell having an incomplete trapping layer 24 has lower permeation resistance of the partition portion 22 than the other cells, allowing more fine particles to flowing out from an end face. While the end face is irradiated with light, light luminance depends on the number of fine particles. Thus, the number of fine particles can be estimated from light luminance. A large number of fine particles flowing out of the cell indicates the presence of an incomplete trapping layer 24 or an additional-deposition cell 25. As illustrated in Fig. 4, the laser smoke detector 60 includes an installation base 63, which houses an incense stick stand 62 to which an incense stick 61 is fixed and fixes a honeycomb filter 20, a pressurization mechanism 64 for pressurizing the interior space of the installation base 63, a photoirradiation apparatus 65 for irradiating smoke emitted from the top surface of the honeycomb filter 20 with a plane light, a photographic apparatus 66 for taking a picture of light-reflecting smoke on top of the honeycomb filter 20, and a hood 67 on which the photoirradiation apparatus 65 and the photographic apparatus 66 are disposed. The top surface of the installation base 63 has a feed opening 63a for supplying smoke to the honeycomb filter 20. The laser smoke detector 60 includes a fine particle source that preferably produces fine particles, for example, having a particle size in the range of approximately 0.3 to 10 µm. More specifically, the fine particle source may be the combustion of incense, such as an incense stick, spray or vaporization of a solvent, such as water, and spreading of fine particles, such as calcium carbonate fine particles, and is preferably an incense stick. The pressurization mechanism 64 may be a booster pump. The photoirradiation apparatus 65 is preferably an apparatus that can emit directional light having a wavelength that induces diffuse reflection by fine particles, for example, a laser, such as a semiconductor laser, a dye laser, or a free electron laser. The photographic apparatus 66 may be any apparatus that can take a picture of fine particles of smoke irradiated with light, for example, an optical camera, or a digital camera or a digital video camera each having CCD or CMOS. Further details of the apparatus structures and test conditions can be found in Japanese Patent No. 3904933 and Japanese Unexamined Patent Application Publication No. 2009-258090. The procedure for the laser smoke test will be described below. First, a partition portion 22 of a honeycomb filter 20 to be tested is examined for a crack by another test method. For example, a CT scan may be used to detect a crack. The term "crack", as used herein, refers to a narrow space having such a size that affects PM trap and disposed in a partition portion between an inlet cell and an outlet cell in the axial direction of a carrier passing through the inlet cell and the outlet cell or along a cross section perpendicular to the axial direction. Subsequently, the incense stick 61 is ignited and fixed to the incense stick stand 62 in the installation base 63. One end face of the honeycomb filter 20 is placed on the feed opening 63a such that the cells 23 of the honeycomb filter 20 are disposed on the feed opening 63a. The honeycomb filter 20 is disposed on a seal (not shown) so as to prevent the leakage of smoke from the space between the honeycomb filter 20 and the installation base 63. The hood 67 is fixed to a test position such that light from the photoirradiation apparatus 65 is disposed in the vicinity of (for example, 3 to 5 mm above) one end face of the honeycomb filter 20. At this test position, the hood 67 surrounds the honeycomb filter 20 and prevents the agitation of fine particle of smoke emitted from the end face of the honeycomb filter 20. Subsequently, smoke of the incense stick 61 is supplied to the cells 23 of the honeycomb filter 20 with the pressurization mechanism 64. Fine particles of the smoke emitted from the other end face are irradiated with light emitted from the photoirradiation apparatus 65, and reflected light is captured with the photographic apparatus 66. A region brighter than the other region is considered to be a region of an additional-deposition cell 25. In the laser smoke test (visualization test), the fine particles have an average particle size determined from the average pore size of the partition portions and are selected according to the permeability of the partition portions. Regarding pressure feed conditions, fine particles are supplied at a gauge pressure of 1 Pa or more and 10 Pa or less. A cell having a relative luminance difference of 150 cd/m² or more is considered to be an additional-deposition cell.

A method for forming the trapping layer 24 may involve supplying a gas containing the raw material for the trapping layer to an inlet cell using a gas (air) as a transport medium for the raw material for the trapping layer. This is preferred because the particle groups constituting the trapping layer become coarse and can form a trapping layer having a very high porosity. The raw material for the trapping layer may be inorganic fiber or inorganic particles. The inorganic fiber may be that described above and preferably has an average particle size of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. The raw material for the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The additional-deposition cells 25 may be formed, for example, by utilizing a chucking jig for forming a honeycomb segment to close some cells around a segment outer area on an inlet surface in the formation of a trapping layer. Alternatively, the additional-deposition cells 25 may be formed by sealing the inlets of some cells with a sealant (such as a sealing tape) in advance. It is preferable to make it difficult to supply the raw material of the trapping layer from the inlets of some cells in advance because this facilitates the formation of the additional-deposition cells 25. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell 23 using a slurry containing inorganic particles serving as the raw material of the trapping layer 24.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 µm or more and 30 µm or less. The inorganic fiber may be that described above and preferably has an average diameter of 0.5 µm or more and 8 µm or less and an average length of 100 µm or more and 500 µm or less. The binding material may be colloidal silica or clay. The bonding layer 27 is preferably formed in the range of 0.5 mm or more and 2 mm or less. The average particle size is the median size (D50) measured with a laser diffraction/scattering particle size distribution analyzer using water as a dispersion medium. The outer protective portion 28 is a layer for protecting the periphery of the honeycomb filter 20 and may contain the inorganic particles, the inorganic fiber, and the binding material described above.

In the honeycomb filter 20, the thermal expansion coefficient of the cells 23 in the longitudinal direction at a temperature in the range of 40°C to 800°C is preferably 6.0 x 10⁻⁶/°C or less, more preferably 1.0 x 10⁻⁶/°C or less, still more preferably 0.8 x 10⁻⁶/°C or less. At a thermal expansion coefficient of 6.0 x 10⁻⁶/°C or less, thermal stress generated by exposure to a high-temperature exhaust gas can be within tolerance.

In the honeycomb filter 20, the partition portion 22 or the trapping layer 24 may contain a catalyst. The catalyst may be at least one of catalysts for promoting the combustion of trapped PM, catalysts for oxidizing unburned gases (HCs, CO, and the like) contained in an exhaust gas, and catalysts for occluding/adsorbing/decomposing NOₓ. The catalyst can increase the efficiency of removing PM, oxidizing unburned gases, or decomposing NOₓ. The catalyst more preferably contains at least one of noble metal elements and transition metal elements. The honeycomb filter 20 may be loaded with another catalyst or a purification material. Among those are a NOₓ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOₓ can more highly purify an exhaust gas.

In the honeycomb filter according to the present embodiment, the cells include the additional-deposition cells 25, which have low flow path resistance and trap additional solid components. The combustion of solid components on the additional-deposition cells 25 serves as an ignition point for the other cells. Thus, trapped solid components can be more efficiently removed. When the honeycomb filter 20 is connected to an engine of a vehicle, the exhaust gas temperature in regeneration treatment tends to vary with the running state of the vehicle. In such a situation, even at a low exhaust gas temperature, the additional-deposition cells 25 in the honeycomb filter 20 according to the present embodiment can raise the exhaust gas temperature. In particular, this effect is accumulated while the exhaust gas temperature varies. Thus, the honeycomb filter 20 can more efficiently remove solid components than honeycomb filters having no additional-deposition cells 25.

The present invention is not limited to the embodiments described above and can be implemented in various aspects within the scope of the present invention.

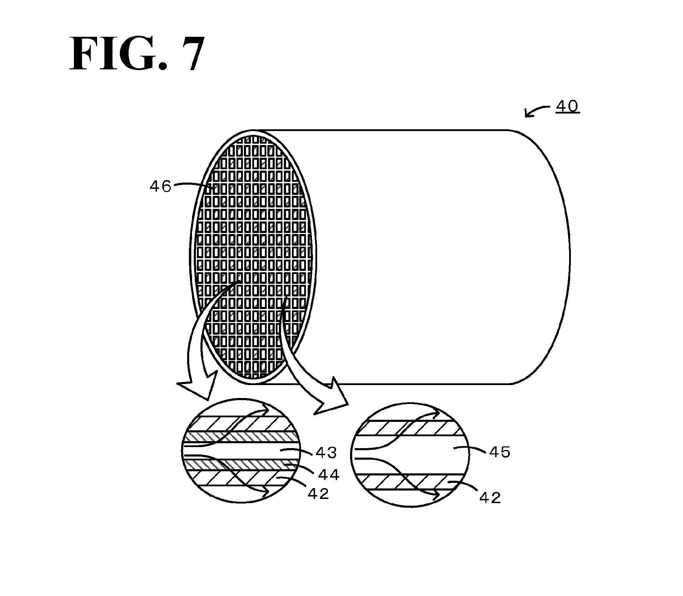

Although the honeycomb segments 21 are joined together with the bonding layer 27 in the honeycomb filter 20 according to the present embodiment, an integrally molded honeycomb filter 40 as illustrated in Fig. 7 is also suitable. In the honeycomb filter 40, partition portions 42, cells 43, trapping layers 44, additional-deposition cells 45, and sealing portions 46 may be the same as the partition portions 22, the cells 23, the trapping layers 24, the additional-deposition cells 25, and the sealing portions 26 of the honeycomb filter 20. Even with such a structure, the additional-deposition cells 45 on which more PM is trapped can more efficiently remove PM.

Although the honeycomb filter 20 contains a catalyst in the present embodiment, any honeycomb filter that can filter out substances to be removed in a fluid is suitable. The honeycomb filter 20 may contain no catalyst. Although the honeycomb filter 20 traps PM contained in an exhaust gas in the present embodiment, any honeycomb filter that traps and removes solid components in a fluid may be envisaged. Such a honeycomb filter may be a honeycomb filter for an engine of construction equipment or a honeycomb filter for a factory or a power plant.

### EXAMPLES

Specific examples of the manufacture of a honeycomb filter will be described below. A honeycomb filter including honeycomb segments joined together was manufactured.

### Manufacture of Honeycomb Filter

A SiC powder and a metallic Si powder were mixed at a mass ratio of 80:20. The mixture was kneaded with methylcellulose, hydroxypropoxylmethylcellulose, a surfactant, and water to prepare a plastic pug. The pug was extruded through a die to form a honeycomb segment formed product having a desired shape. The thickness of the partition portion was 305 µm, the cell pitch was 1.47 mm, the cross section was 35 mm x 35 mm, and the length was 152 mm. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that a cell that was open at one end and closed at the other end and a cell that was closed at one end and open at the other end were alternately disposed. Air containing SiC particles having an average particle size smaller than the average pore size of the partition was introduced from open ends of the honeycomb segment fired product on the exhaust gas inlet side while drawn in by suction from the outlet side of the honeycomb segments. The SiC particles were deposited on the surface layer of the partition on the exhaust gas inlet side. The inlets of a predetermined number of cells at predetermined positions were sealed to intentionally form additional-deposition cells. Heat treatment in the atmosphere at 1300°C for two hours was performed to join the SiC particles deposited on the surface layer of the partition together and the deposited SiC particles and SiC and Si particles constituting the partition together. Thus, honeycomb segments were formed in which the trapping layer was formed on the partition portion. The sealing on the inlets of the cells was removed by combustion during the heat treatment. A binder slurry prepared by kneading alumina silicate fiber, colloidal silica, poly(vinyl alcohol), silicon carbide, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure. The honeycomb filter had a cross section diameter of 143.8 mm, a length of 152.4 mm, and a volume of 2.5 L. In Examples 1 to 30 and Comparative Examples 1 to 10 described below, the porosity of the partition portion was 40% by volume, the average pore size was 15 µm, and the average size of particles forming the trapping layer was 2.0 µm. The porosity and the average pore size of the partition portion were measured with a mercury porosimeter (Auto Pore III 9405 manufactured by Micromeritics). The average particle size of the raw material particles of the trapping layer is the median size (D50) measured with a laser diffraction/scattering particle size distribution analyzer (LA-910 manufactured by Horiba, Ltd.) using water as a dispersion medium.

### Catalyst Loading

Raw materials of alumina:platinum:ceria-based material = 7:0.5:2.5 based on the weight ratio, in which the ceria-based material was Ce:Zr:Pr:Y:Mn = 60:20:10:5:5 based on the weight ratio, were mixed to prepare an aqueous catalyst slurry. The outlet end face (exhaust gas outlet side) of a honeycomb segment was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of honeycomb filter was 30 g/L.

### COMPARATIVE EXAMPLE 1

A honeycomb filter according to Comparative Example 1 was fabricated using the process for manufacturing a honeycomb filter described above, wherein the cell density was 46.5 cells/cm², the inlets of the cells were not sealed, and a trapping layer (a complete layer) was formed on all the cells.

### EXAMPLES 1 TO 6

A honeycomb filter according to Example 1 was fabricated using the process for manufacturing a honeycomb filter described above, wherein the cell density was 46.5 cells/cm², an inlet of one cell in the outer area of the honeycomb filter was sealed, and a trapping layer was formed on the other cells. In Example 1, the ratio R of the number of additional-deposition cells to the total number of cells was 0.7%. Honeycomb filters according to Examples 2 to 6 were fabricated using the process for manufacturing a honeycomb filter described above, wherein the inlets of outer-area cells of the honeycomb filter were sealed such that the ratio R's of the number of additional-deposition cells to the total number of cells were 3.5%, 6.9%, 10.4%, 13.9%, and 20.0%, respectively, and a trapping layer was formed on the other cells.

### COMPARATIVE EXAMPLE 2

A honeycomb filter according to Comparative Example 2 was fabricated using the process for manufacturing a honeycomb filter described above, wherein the cell density was 46.5 cells/cm², the inlets of outer-area cells of the honeycomb filter were sealed such that the ratio R of the number of additional-deposition cells to the total number of cells was 27.8%, and a trapping layer was formed on the other cells.

### EXAMPLES 7 TO 12

Honeycomb filters according to Examples 7 to 12 were fabricated using the process for manufacturing a honeycomb filter described above, wherein the cell density was 46.5 cells/cm², the inlets of central-area cells of the honeycomb filter were sealed such that the ratio R's of the number of additional-deposition cells to the total number of cells were 0.7%, 3.5%, 6.9%, 10.4%, 13.9%, and 20.0%, respectively, and a trapping layer was formed on the other cells.

### COMPARATIVE EXAMPLE 3

A honeycomb filter according to Comparative Example 3 was fabricated using the process for manufacturing a honeycomb filter described above, wherein the cell density was 46.5 cells/cm², the inlets of central-area cells of the honeycomb filter were sealed such that the ratio R of the number of additional-deposition cells to the total number of cells was 27.8%, and a trapping layer was formed on the other cells.

### EXAMPLES 13 TO 18

Honeycomb filters according to Examples 13 to 18 were fabricated using the process for manufacturing a honeycomb filter described above, wherein the cell density was 46.5 cells/cm², the inlets of randomly dispersed cells of the honeycomb filter were sealed such that the ratio R's of the number of additional-deposition cells to the total number of cells were 0.7%, 3.5%, 6.9%, 10.4%, 13.9%, and 20.0%, respectively, and a trapping layer was formed on the other cells.

### COMPARATIVE EXAMPLE 4

A honeycomb filter according to Comparative Example 4 was fabricated using the process for manufacturing a honeycomb filter described above, wherein the cell density was 46.5 cells/cm², the inlets of randomly dispersed cells of the honeycomb filter were sealed such that the ratio R of the number of additional-deposition cells to the total number of cells was 27.8%, and a trapping layer was formed on the other cells.

### COMPARATIVE EXAMPLE 5

A honeycomb filter according to Comparative Example 5 was fabricated using the process for manufacturing a honeycomb filter described above, wherein the cell density was 23.3 cells/cm², and a trapping layer was formed on all the cells (a complete layer) such that the ratio R of the number of additional-deposition cells to the total number of cells was 0%.

### EXAMPLES 19 TO 24

Honeycomb filters according to Examples 19 to 21 were fabricated using the process for manufacturing a honeycomb filter described above, wherein the cell density was 23.3 cells/cm², the inlets of outer-area cells of the honeycomb filter were sealed such that the ratio R's of the number of additional-deposition cells to the total number of cells were 3.7%, 9.9%, and 19.8%, respectively, and a trapping layer was formed on the other cells. Honeycomb filters according to Examples 22 to 24 were fabricated using the process for manufacturing a honeycomb filter described above, wherein the cell density was 23.3 cells/cm², the inlets of randomly dispersed cells of the honeycomb filter were sealed such that the ratio R's of the number of additional-deposition cells to the total number of cells were 3.7%, 10.4%, and 20.0%, respectively, and a trapping layer was formed on the other cells.

### COMPARATIVE EXAMPLES 6 AND 7

A honeycomb filter according to Comparative Example 6 was fabricated using the process for manufacturing a honeycomb filter described above, wherein the cell density was 23.3 cells/cm², the inlets of outer-area cells of the honeycomb filter were sealed such that the ratio R of the number of additional-deposition cells to the total number of cells was 28.4%, and a trapping layer was formed on the other cells. A honeycomb filter according to Comparative Example 7 was fabricated using the process for manufacturing a honeycomb filter described above, wherein the cell density was 23.3 cells/cm², the inlets of randomly dispersed cells of the honeycomb filter were sealed such that the ratio R of the number of additional-deposition cells to the total number of cells was 28.4%, and a trapping layer was formed on the other cells.

### COMPARATIVE EXAMPLE 8

A honeycomb filter according to Comparative Example 8 was fabricated using the process for manufacturing a honeycomb filter described above, wherein the cell density was 54.3 cells/cm², and a trapping layer was formed on all the cells (a complete layer) such that the ratio R of the number of additional-deposition cells to the total number of cells was 0%.

### EXAMPLES 25 TO 30

Honeycomb filters according to Comparative Examples 25 to 27 were fabricated using the process for manufacturing a honeycomb filter described above, wherein the cell density was 54.3 cells/cm², the inlets of outer-area cells of the honeycomb filter were sealed such that the ratio R's of the number of additional-deposition cells to the total number of cells were 3.6%, 10.5%, and 19.9%, respectively, and a trapping layer was formed on the other cells. Honeycomb filters according to Examples 28 to 30 were fabricated using the process for manufacturing a honeycomb filter described above, wherein the cell density was 54.3 cells/cm², the inlets of randomly dispersed cells of the honeycomb filter were sealed such that the ratio R's of the number of additional-deposition cells to the total number of cells were 3.5%, 10.4%, and 20.0%, respectively, and a trapping layer was formed on the other cells.

### COMPARATIVE EXAMPLES 9 AND 10

A honeycomb filter according to Comparative Example 9 was fabricated using the process for manufacturing a honeycomb filter described above, wherein the cell density was 54.3 cells/cm², the inlets of outer-area cells of the honeycomb filter were sealed such that the ratio R of the number of additional-deposition cells to the total number of cells was 27.7%, and a trapping layer was formed on the other cells. A honeycomb filter according to Comparative Example 10 was fabricated using the process for manufacturing a honeycomb filter described above, wherein the cell density was 54.3 cells/cm², the inlets of randomly dispersed cells of the honeycomb filter were sealed such that the ratio R of the number of additional-deposition cells to the total number of cells was 27.7%, and a trapping layer was formed on the other cells.

### Formation of Cell Having Incomplete Trapping Layer

The examples described above discussed additional-deposition cells having no trapping layer. Additional-deposition cells having an incomplete trapping layer, which have a region having no trapping layer in the cell region in the flow path direction, will be described below. In the case that a region having no trapping layer is formed downstream in the flow path direction, a trapping layer is formed while the region having no trapping layer and its downstream region are plugged, for example, with absorbent cotton. In the case that a region having no trapping layer was formed upstream, a region on which a trapping layer was to be formed was plugged with absorbent cotton, the other cells were masked, a resin was poured into the cell plugged with absorbent cotton and, after the mask was removed, was solidified, a trapping layer was formed, and the resin was removed by combustion while film-forming particles were heat-treated to be bound together. Consequently, the portion coated with the resin had no trapping layer because of its permeation resistance and became the region having no trapping layer. In the case that a region having no trapping layer was formed only in the midstream, both of the procedures described above were performed. The relationship between the size of a region having no trapping layer and the relative luminance difference was examined by changing the sizes of the upstream, midstream, and downstream regions having no trapping layer. The result showed that the same region having no trapping layer had the same relative luminance difference. Thus, the arrangement of a cell having an incomplete trapping layer was examined with a honeycomb filter having a downstream region having no trapping layer.

### EXAMPLES 31 AND 32

A honeycomb filter according to Example 31 having incomplete cells at the same position as in Example 6 was fabricated using the same process as in Example 6 except that the ratio of additional-deposition cells was 20.0%, and an upstream region having no trapping layer having a length of 20% of the entire length of the cell (a length of 30 mm) was formed. A honeycomb filter according to Example 32 having incomplete cells at the same position as in Example 12 was fabricated using the same process as in Example 12 except that the ratio of additional-deposition cells was 20.0%, and an upstream region having no trapping layer having a length of 40% of the entire length of the cell (a length of 60 mm) was formed.

### Pressure Loss Test

A honeycomb filter thus fabricated was installed in a 2.0-L diesel engine exhaust system on an engine bench, and the pressure loss was measured in a steady state at an engine speed of 2000 rpm and a torque of 60 Nm while the amount of PM deposition was 6.0 (g/L) per external form volume of the honeycomb filter. The results were determined as a pressure increase rate relative to Comparative Example 1, which was set at 100.

### Regeneration Efficiency Test

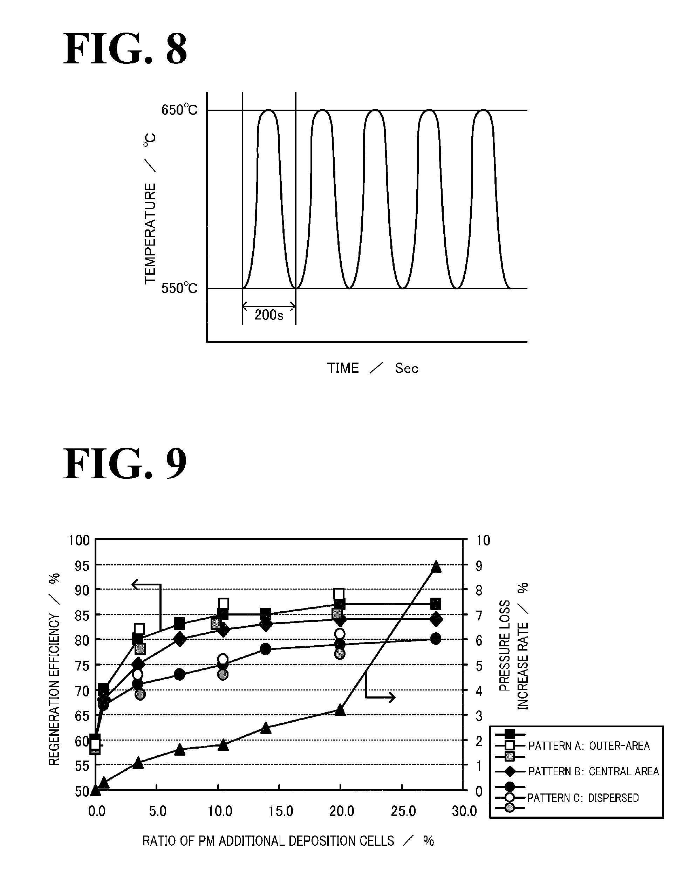

A honeycomb filter thus fabricated was installed in a 2.0-L diesel engine exhaust system on an engine bench and was operated until the amount of PM deposition of the honeycomb filter reached 6.0 (g/L). The honeycomb filter was regenerated by heat cycles illustrated in Fig. 9. The combustion efficiency of PM (regeneration efficiency) was determined from a change in weight resulting from the regeneration of the honeycomb filter. The amount of PM deposition before the regeneration treatment and the amount of residual PM after the regeneration treatment were measured to calculate the amount of PM combustion in the regeneration. The regeneration efficiency was determined as the ratio of the amount of PM combustion in the regeneration treatment to the amount of PM deposition before the regeneration treatment. Fig. 9 is an explanatory view of heat cycles in the regeneration treatment. A temperature cycle of from 550°C to 650°C and from 650°C to 550°C in 200 seconds was performed five times. The regeneration efficiency test was performed under conditions where the exhaust gas temperature measured 20 mm in front of the inlet end face of a honeycomb filter was 600°C.

### Laser Smoke Test

A laser smoke test was performed with a honeycomb filter thus fabricated. CT scan images of a cross section of the honeycomb filter perpendicular to the exhaust gas flow direction were continuously taken with a CT scanner (Aquilion TXS-101A manufactured by Toshiba Corp.) to detect a crack. After checking samples for a crack, the samples were subjected to the laser smoke test. In this test, fine particles (having an average particle size in the range of 1 to 10 µm) of the smoke of an incense stick were fed at a pressure (1 to 30 Pa) to the honeycomb filter with a pump. A slit-like beam of a semiconductor laser was emitted 3 mm above the end face. Images were taken with a CCD camera and were analyzed. Results corresponding to the state of cells were obtained for all the samples. For example, cells having a complete trapping layer had no region having different luminances. Additional-deposition cells 25 in an outer area resulted in high luminance in that area. The difference between the luminance of cells having no trapping layer or cells having an incomplete trapping layer (additional-deposition cells) and the lowest luminance of cells having a complete trapping layer was 150 cd/m² or more. The pressurization condition was fixed to 10 Pa in terms of gauge pressure (differential pressure). The fine particles were originated from the smoke of an incense stick and had a particle size in the range of 1 to 10 µm, which were considered to rarely pass through a trapping layer because the partition portion had an average pore size of 15 µm.

### Experimental Results

Table 1 shows the state of cell, the ratio R of the number of additional-deposition cells to the total number of cells (%), the regeneration efficiency (%), and the pressure increase rate (%) relative to Comparative Example 1, with respect to Examples 1 to 18 and Comparative Examples 1 to 4. Table 2 shows the state of cell, the ratio R of the number of additional-deposition cells to the total number of cells (%), the regeneration efficiency (%), and the pressure increase rate (%) relative to Comparative Example 5, with respect to Examples 19 to 24 and Comparative Examples 5 to 7. Table 3 shows the state of cell, the ratio R of the number of additional-deposition cells to the total number of cells (%), the regeneration efficiency (%), and the pressure increase rate (%) relative to Comparative Example 8, with respect to Examples 25 to 30 and Comparative Examples 8 to 10. Fig. 10 shows the regeneration efficiency and the pressure loss as a function of the ratio R of additional-deposition cells for Examples 1 to 30 and Comparative Examples 1 to 10. Tables 1 to 3 and Fig. 10 show that the regeneration efficiency increase with the number of additional-deposition cells. It was surmised that a large amount of PM deposited on the additional-deposition cells served as an ignition point in regeneration treatment, thus increasing regeneration efficiency. The pressure loss increased with increasing additional-deposition cells. When the additional-deposition cells constituted 20% or less of the total number of cells of the honeycomb segment, the rate of increase in pressure loss was less than 5%. It was surmised that an increase in pressure loss due to the trapping layer was effectively suppressed. However, when the ratio R of additional-deposition cells exceeded 20%, the increase in pressure loss was remarkable, although the regeneration efficiency was unchanged. These results show that when one or more additional-deposition cells are present in the honeycomb segment and when the ratio R is 20% or less, the regeneration efficiency of the honeycomb filter can be improved without compromising the effect of suppressing pressure loss due to the trapping layer. Examples 19 to 30 show that there was the same tendency even with different cell densities.

Table 1 also shows the measurements for Examples 31 and 32, in which cells having an incomplete trapping layer were formed. Example 32 had a regeneration efficiency of 87% and a pressure increase rate of 3.1%. Example 32 had a regeneration efficiency of 84% and a pressure loss increase of 3.7%. A honeycomb filter that included cells having an incomplete trapping layer had substantially the same results as cells having no trapping layer.

**Table 1**

| SAMPLE¹⁾ | STATE OF CELLS | RATIO OF NUMBER OF ADDITIONAL DEPOSITION CELLS²⁾ | REGENERATIO N EFFICIENCY | PRESSURE INCREASE RATE³⁾ |
|---|---|---|---|---|
| | | R (%) | (%) | (%) |
| COMPARATIVE EXAMPLE 1 | COMPLETE LAYER | 0.0 | 60 | 0 |
| EXAMPLE 1 | PATTERN A (OUTER-AREA) | 0.7 | 70 | 0.3 |
| EXAMPLE 2 | | 3.5 | 80 | 1.1 |
| EXAMPLE 3 | | 6.9 | 83 | 1.6 |
| EXAMPLE 4 | | 10.4 | 85 | 1.8 |
| EXAMPLE 5 | | 13.9 | 85 | 2.5 |
| EXAMPLE 6 | | 20.0 | 87 | 3.2 |
| COMPARATIVE EXAMPLE 2 | | 27.8 | 87 | 8.9 |
| EXAMPLE 31 | INCOMPLETE | 20.0 | 87 | 3.1 |
| EXAMPLE 7 | PATTERN B (CENTRAL-AREA) | 0.7 | 68 | 0.3 |
| EXAMPLE 8 | | 3.5 | 75 | 1.5 |
| EXAMPLE 9 | | 6.9 | 80 | 1.7 |
| EXAMPLE 10 | | 10.4 | 82 | 2.0 |
| EXAMPLE 11 | | 13.9 | 83 | 2.8 |
| EXAMPLE 12 | | 20.0 | 84 | 3.8 |
| COMPARATIVE EXAMPLE 3 | | 27.8 | 84 | 9.5 |
| EXAMPLE 32 | INCOMPLETE | 20.0 | 84 | 3.7 |
| EXAMPLE 13 | PATTERN C (DISPERSED) | 0.7 | 67 | 0.3 |
| EXAMPLE 14 | | 3.5 | 71 | 1.1 |
| EXAMPLE 15 | | 6.9 | 73 | 1.6 |
| EXAMPLE 16 | | 10.4 | 75 | 1.8 |
| EXAMPLE 17 | | 13.9 | 78 | 2.5 |
| EXAMPLE 18 | | 20.0 | 79 | 3.4 |
| COMPARATIVE EXAMPLE 4 | | 27.8 | 80 | 9.0 |

| | | | | |
|---|---|---|---|---|
| 1) CELL DENSITY: 46.5 CELLS/cm² 2) RATIO (%) OF NUMBERS OF ADDITIONAL DEPOSITION CELLS TO TOTAL NUMBER OF CELLS 3) PRESSURE INCREASE RATE (%) RELATIVE TO COMPARATIVE EXAMPLE 1 WHICH IS SET AT 100 | | | | |

**Table 2**

| SAMPLE¹⁾ | STATE OF CELLS | RATIO OF NUMBER OF ADDITIONAL DEPOSITION CELLS²⁾ | REGENERATIO N EFFICIENCY | PRESSURE INCREASE RATE³⁾ |
|---|---|---|---|---|
| | | R (%) | (%) | (%) |
| COMPARATIVE EXAMPLE 5 | COMPLETE LAYER | 0.0 | 58 | 0 |
| EXAMPLE 19 | PATTERNA (OUTER-AREA) | 3.7 | 78 | 1.1 |
| EXAMPLE 20 | | 9.9 | 83 | 1.6 |
| EXAMPLE 21 | | 19.8 | 85 | 3.2 |
| COMPARATIVE EXAMPLE 6 | | 28.4 | 86 | 8.9 |
| EXAMPLE 22 | PATTERNC (DISPERSED) | 3.7 | 69 | 1.1 |
| EXAMPLE 23 | | 10.4 | 73 | 1.8 |
| EXAMPLE 24 | | 20.0 | 77 | 3.3 |
| COMPARATIVE EXAMPLE 7 | | 28.4 | 78 | 8.6 |

| | | | | |
|---|---|---|---|---|
| 1) CELL DENSITY: 23.3 CELLS/cm² 2) RATIO (%) OF NUMBERS OF ADDITIONAL DEPOSITION CELLS TO TOTAL NUMBER OF CELLS 3) PRESSURE INCREASE RATE (%) RELATIVE TO COMPARATIVE EXAMPLE 5 WHICH IS SET AT 100 | | | | |

**Table 3**

| SAMPLE¹⁾ | STATE OF CELLS | RATIO OF NUMBER OF ADDITIONAL DEPOSITION CELLS²⁾ | REGENERATIO N EFFICIENCY | PRESSURE INCREASE RATE³⁾ |
|---|---|---|---|---|
| | | R (%) | (%) | (%) |
| COMPARATIVE EXAMPLE 8 | COMPLETE LAYER | 0.0 | 59 | 0 |
| EXAMPLE 25 | PATTERNA (OUTER-AREA) | 3.6 | 82 | 1.1 |
| EXAMPLE 26 | | 10.5 | 87 | 1.9 |
| EXAMPLE 27 | | 19.9 | 89 | 3.2 |
| COMPARATIVE EXAMPLE 9 | | 27.7 | 89 | 9.1 |
| EXAMPLE 28 | PATTERNC (DISPERSED) | 3.5 | 73 | 1.1 |
| EXAMPLE 29 | | 10.4 | 76 | 1.7 |
| EXAMPLE 30 | | 20.0 | 81 | 3.5 |
| COMPARATIVE EXAMPLE 10 | | 27.7 | 82 | 9.2 |

| | | | | |
|---|---|---|---|---|
| 1) CELL DENSITY: 54.3 CELLS/cm² 2) RATIO (%) OF NUMBERS OF ADDITIONAL DEPOSITION CELLS TO TOTAL NUMBER OF CELLS 3) PRESSURE INCREASE RATE (%) RELATIVE TO COMPARATIVE EXAMPLE 8 WHICH IS SET AT 100 | | | | |

The present application claims the benefit of the priority to Japanese Patent Application No. 2010-81897 filed on March 31, 2010, the entire contents of which are incorporated herein by reference.

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter, comprising:
a plurality of porous partition portions each forming a cell, the cell being open at one end and closed at the other end and serving as a flow path of a fluid; and
a trapping layer for trapping and removing solid components contained in the fluid, the trapping layer being disposed on each of the partition portions,
wherein, when a visualization test is performed after a predetermined crack inspection shows that the honeycomb filter has no cracks, the visualization test feeding fine particles having an average particle size determined from the average pore size of the partition portions from one end face of the honeycomb filter at a gauge pressure of 1 Pa or more and 10 Pa or less and irradiating the other end face with light to visualize fine particles flowing from that other end face, the cells include additional-deposition cells having a luminance difference of 150 cd/m² or more in the laser smoke test, and the ratio R (%) of the number of the additional-deposition cells to the total number of cells satisfying 0 (%) < R ≤ 20 (%).

2. The honeycomb filter according to Claim 1, wherein the ratio R of the number of the additional-deposition cells to the total number of cells is 7 (%) or less.

3. The honeycomb filter according to Claim 1 or 2, wherein the additional-deposition cells are cells having an incomplete trapping layer or cells having no trapping layer or both.

4. The honeycomb filter according to any one of Claims 1 to 3, wherein the trapping layers are formed by supplying an inorganic material that is a raw material for the trapping layers to the cells using a gas as a transport medium.

5. The honeycomb filter according to any one of Claims 1 to 4, wherein the partition portions contain one or more inorganic materials selected from cordierite, SiC, mullite, aluminum titanate, alumina, silicon nitride, SIALON, zirconium phosphate, zirconia, titania, and silica.

6. The honeycomb filter according to any one of Claims 1 to 5, wherein the trapping layers contain one or more inorganic materials selected from cordierite, SiC, mullite, aluminum titanate, alumina, silicon nitride, SIALON, zirconium phosphate, zirconia, titania, and silica.

7. The honeycomb filter according to any one of Claims 1 to 6, wherein the honeycomb filter is formed by joining two or more honeycomb segments with a bonding layer, each of the honeycomb segments having the partition portion and the trapping layer.

8. The honeycomb filter according to any one of Claims 1 to 7, wherein the partition portions or the trapping layers or both are loaded with a catalyst.
